# EUROPEAN PATENT APPLICATION

(11) **EP 4 273 796 A1**
(43) Date of publication of application: **08.11.2023**
(21) Application number: 22186302.0
(22) Date of filing: 21.07.2022
(51) Int. Cl.: G06T 7/00, G06T 7/11, G06T 7/70

(54) **PROCESSING SPECTRAL IMAGE DATA GENERATED BY A COMPUTED TOMOGRAPHY SCANNER**

(30) Priority: 05.05.2022 US 202263338503 P
(71) Applicant: Koninklijke Philips N.V., 5656 AG Eindhoven (NL)
(72) Inventor: NICKISCH, Hannes, Eindhoven (NL); BROSCH, Tom, Eindhoven (NL); GOLLA, Alena-Kathrin, 5656AG Eindhoven (NL); CATHIER, Pascal Yves François, 5656AG Eindhoven (NL); NEMPONT, Olivier, Eindhoven (NL); POPOFF, Alexandre Jean Michel, Eindhoven (NL); KLINDER, Tobias, Eindhoven (NL)
(74) Representative: Philips Intellectual Property & Standards

(57) **Abstract**

A method and system for generating predictive indicators of likely pathologies. Spectral image data is processed to identify regions of interest, which represent different sets of one or more organs. Each region of interest is then processed using a respective set of one or more machine-learning algorithms to produce a respective number of predictive indicators for each region of interest. At least one of these predictive indicators is/are then output.

## Description

### FIELD OF THE INVENTION

The present invention is related to the field of medical imaging and, in particular, the field of processing projection data produced by a computed tomography scanner.

### BACKGROUND OF THE INVENTION

Computed tomography (CT) scanners are well-established medical imaging devices that use a detector arrangement, formed of an array of detectors or pixels, to detect an interaction between X-ray radiated energy and irradiated material in order to generate medical image data.

In the field of computed tomography imaging, the use of non-traditional imaging techniques, such as spectral computed tomography, is becoming increasingly common. CT scanners that employ spectral computed tomography techniques are able to generate images that represent a particular type and/or frequency of particles incident at the detector of the CT scanner, e.g. depending upon the modality of the CT scanner. Image data produced using this technique is often called spectral image data, spectral basis image data, material image data or material basis image data.

More specifically, spectral CT is a CT technique that is based upon the discrimination between at least two different X-ray photon energies or spectra. This allows for material separation based on different attenuation profiles of the materials at different energy values. In this way, a CT scanner is able to produce different types of spectral image data representing different energy levels or effects. Examples of spectral image types include photoelectric effect images and Compton-scattering images. Other examples include iodine image data, which indicates the presence of iodine; water image data, which indicates the presence of water; contrast agent image data, which indicates the presence of a contrast agent, an effective atomic number image data, which indicates the effective atomic number of elements in the image data, and so on.

For instance, a CT scanner is able to generate photoelectric effect image data, which is image data generated responsive only to particles that arrive at a detector as a result of a photoelectric effect interaction. As another example, a spectral CT scanner is able to generate Compton-scattering image data, which is image data generated responsive only to particles that arrive at a detector as a result of a Compton-scattering effect interaction.

There is an ongoing desire to improve the diagnostic usefulness of spectral image data and, in particular, aid a clinician, other user or further processing system in the analysis of spectral image data.

### SUMMARY OF THE INVENTION

Various embodiments of the invention are defined by the claims.

According to examples in accordance with one embodiment of the invention, there is provided a computer-implemented method of processing spectral image data of a subject generated by a computed tomography scanner.

The computer-implemented method comprises: processing the spectral image data to identify at least two regions of interest, each region of interest representing a different set of one or more organs; processing each region of interest using a respective one of a plurality of sets of one or more machine-learning algorithms, each machine-learning algorithm being configured to process the region of interest to generate a predictive indicator that indicates a likelihood that the region of interest contains at least one representation of a predetermined pathology; and outputting at least one predictive indicator generated by the processing of each region of interest.

One embodiment of the invention proposes an approach for aiding in the automatic analysis of spectral image data. In particular, it is proposed to make use of region-specific machine-learning processes for analyzing spectral image data of a subject. The spectral image data is processed to identify at least two different regions of interest. Each region is then processed using one or more region-specific machine-learning algorithms to produce a number of predictive indicators. Each predictive indicator represents or indicates a likelihood that the region of interest contains a predetermined pathology, e.g., a particular disease, lesion, growth and/or abnormality.

Various forms of predictive indicator are envisaged, including location indicators that identify a location of any likely pathology, binary indicators that identify a binary probability that the region of interest contains the pathology, and/or numerical indicators that indicate a numerical probability that the region of interest contains the pathology.

Embodiments are based on the recognition that spectral image data contains a vast quantity of information that is difficult for a clinician to accurately and quickly assess, especially in highpressure and time-sensitive environments, such as an emergency department of a hospital. By providing pointers or indicators to particular regions or areas of the spectral image data containing likely pathologies, a significant reduction in wasted time for identifying the relevant areas can be achieved.

It will be appreciated that predictive indicators may also be passed to further processing systems, e.g., for more complete or further automated analysis of the subject. Thus, it is not essential that the predictive indicators be provided directly to a clinician, e.g., via a user interface.

In some embodiments, each machine-learning algorithm is further configured to generate a confidence score for the predictive indicator generated by the machine-learning algorithm, the confidence score representing a confidence in the likelihood that the region of interest contains the at least one representation of the predetermined pathology.

The computer-implemented method may further comprise selecting at least one of the predictive indicators generated by the processing of each region of interest responsive to each confidence score generated by the set of one or more machine-learning algorithms; and outputting at least one predictive indicator, where it comprises outputting the selected at least one predictive indicator.

According to one embodiment, the generated predictive indicators are effectively filtered based on their confidence score(s) to improve a relevance of the predictive indicators output by the method, thereby reducing false positives.

In some examples, outputting the at least one predictive indicator comprises controlling a user interface to provide a visual representation responsive to the at least one predictive indicator. In this way, a user such as a clinician can be provided with information about the predictive indicators. This information can be used by the clinician as part of a clinical decision process, such that this approach provides a tool for aiding a clinician in making a clinical decision.

Optionally, each machine-learning algorithm is further configured to generate a confidence score for the predictive indicator generated by the machine-learning algorithm, the confidence score representing a confidence in the likelihood that the region of interest contains the at least one representation of the predetermined pathology.

Controlling the user interface may be further responsive to each confidence score generated by the plurality of sets of one or more machine-learning algorithms. The use of confidence scores facilitates improved control and selection of the most appropriate or relevant predictive indicators to provide to an individual, e.g., to avoid or minimize drawing attention to inaccurate results.

In some examples, controlling the user interface comprises providing greater visual emphasis to any of the at least one predictive indicator with higher confidence scores than any of the at least one predictive indicator with lower confidence scores. This approach recognizes that the most confident predictive indicators are the most likely to be associated with actual or ground-truth facts, thereby credibly improving a guidance provided to a user in identifying the most appropriate areas.

Controlling the user interface may comprise ordering the at least one predictive indicator based on their confidence measures to determine an order of the at least one predictive indicator, and controlling the user interface to provide a visual representation of the determined order of the at least one predictive indicator.

At least one of the machine-learning algorithms may comprise a location-identifying machine-learning algorithm. The location-identifying machine-learning algorithm is configured to process the region of interest to identify, within the region of interest, the location of any representation of the predetermined pathology predicted to be present with a likelihood greater than a predetermined likelihood. The predictive indicator produced by the location-identifying machine-learning algorithm indicates any identified location within the region of interest.

Identifying locations of likely pathologies further improves an assistance available to a clinician or further processing system(s), by further narrowing down the likely area for a pathology to guide a clinician in quickly identifying areas for investigation.

In some embodiments, outputting each predictive indicator comprises controlling a user interface to provide a visual representation responsive to the at least one predictive indicator; and the visual representation comprises, for each location identified by any location-identifying machine-learning algorithm that provides a predictive indicator in the at least one predictive indicator, a visual representation responsive to the identified location.

In some embodiments, controlling the user interface comprises, for each location identified by any location-identifying machine-learning algorithm that provides a predictive indicator in the at least one predictive indicator, overlaying a visual representation of the identified location over a visual representation of the spectral image data.

In some embodiments, controlling the user interface comprises, for each location identified by any location-identifying machine-learning algorithm that provides a predictive indicator in the at least one predictive indicator, providing a visual representation of a portion of the image data in the vicinity of the identified location.

This approach automatically provides a user at the user interface with valuable and clinically relevant information for assessing the most appropriate image data. This significantly reduces the workload of the user for analyzing the spectral image data, saving valuable clinical time.

In some embodiments, each predetermined pathology comprises a disease, lesion, growth or abnormality in the respective region of interest.

Processing the spectral image data to identify at least two regions of interest may comprise performing an image segmentation process on the spectral image data.

Processing the spectral image data to identify at least two regions of interest may comprise registering the spectral image data to an anatomical atlas that identifies expected regions of interest, and identifying regions of the registered spectral image data falling within the expected regions of interest of the anatomical atlas as the at least two regions of interest.

There is also provided a processing system for processing spectral image data of a subject generated by a computed tomography scanner, the processing system being configured to: obtain the spectral image data at an input interface; process the spectral image data to identify at least two regions of interest, each region of interest representing a different set of one or more organs; process each region of interest using a respective one of a plurality of sets of one or more machine-learning algorithms, each machine-learning algorithm being configured to process the region of interest to generate a predictive indicator that indicates a likelihood that the region of interest contains at least one representation of a predetermined pathology; and output, at an output interface, at least one predictive indicator generated by the processing of each region of interest.

The processing system may be adapted to carry out any herein described method, as would be apparent to the skilled person.

There is also proposed a system comprising a user interface and the processing system configured to control the user interface to provide a visual representation responsive to each predictive indicator.

There is also proposed a non-transitory computer program product comprising computer program code which, when executed on a computing device having a processing system, cause the processing system to perform all of the steps of any herein described method.

Any advantages of the computer-implemented method according to the present invention analogously and similarly apply to the system and computer program herein disclosed. It will be appreciated by those skilled in the art that two or more of the above-mentioned options, implementations, and/or aspects of the invention may be combined in any way deemed useful.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates an approach for aiding a clinician;
Figure 2 is a flowchart illustrating an embodiment of the inventive method; and
Figure 3 is a block diagram illustrating an embodiment of the inventive system.

### DETAILED DESCRIPTION OF THE EMBODIMENTS

Various embodiments of the invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for generating predictive indicators of likely pathologies. Spectral (CT) image data is processed to identify regions of interest, which represent different sets of one or more organs. Each region of interest is then processed using a respective set of one or more machine-learning algorithms to produce a respective number of predictive indicators for each region of interest. At least one of these predictive indicators is/are then output.

Embodiments are based on the realization that spectral image data contains a large amount of data, which can potentially overwhelm a clinician attempting to review the spectral image data. By performing region-specific processing of spectral image data, a region-by-region approach to generating indicators can be provided to a clinician, meaning that a clinician is able to quickly identify the most relevant regions for investigation, significantly reducing an amount of time spent to identify the most relevant areas.

Further embodiments appreciate that certain parts of the spectral image data, e.g., certain spectral images of the spectral image data, provide more useful information to a clinician than other parts. Approaches thereby provide a technique for selecting spectral image(s) to provide alongside the predictive indicator to improve a contextual awareness and relevance of output information.

Disclosed approaches may be employed in any suitable medical/clinical environment, e.g., for analysis during an emergency medical situation. However, embodiments could also be employed for the purposes of research or analysis.

Some embodiments provide a mechanism for a diagnostic clinical radiology support system. The proposed approaches allow for: flagging and identification of relevant and important findings or predictions in the increased spectral imaging space; sorting of findings or predictions according to selected criteria, such as relevance and/or severity; and provision of a visualization with key or important spectral images allowing for the substantiation of any predictions.

The invention has the potential to improve the existing CT reading workflow by focusing the attention of the reader and optionally providing the most adequate or most appropriate spectral results, e.g., upon request.

More particularly, it has been recognized that spectral image data contains a large amount of complex and non-intuitive data. This makes it a difficult and time-consuming task for a clinician to accurately assess the spectral data. This can have a significant impact on subject outcome, especially in urgent or time-sensitive situations, e.g., during a medical emergency. A significant reduction in wasted time and, therefore, improved patient outcome can be achieved by providing pointers or indicators to particular regions or areas of the spectral image data.

In the context of the present disclosure, an image or image data contains a representation of an element in an image-domain representation, or version of the element is present in the image or image data. Spectral image data may be formed from a plurality of spectral images - each spectral image representing a different type of spectral image data. Techniques for generating spectral image data have been previously described and are established in the art.

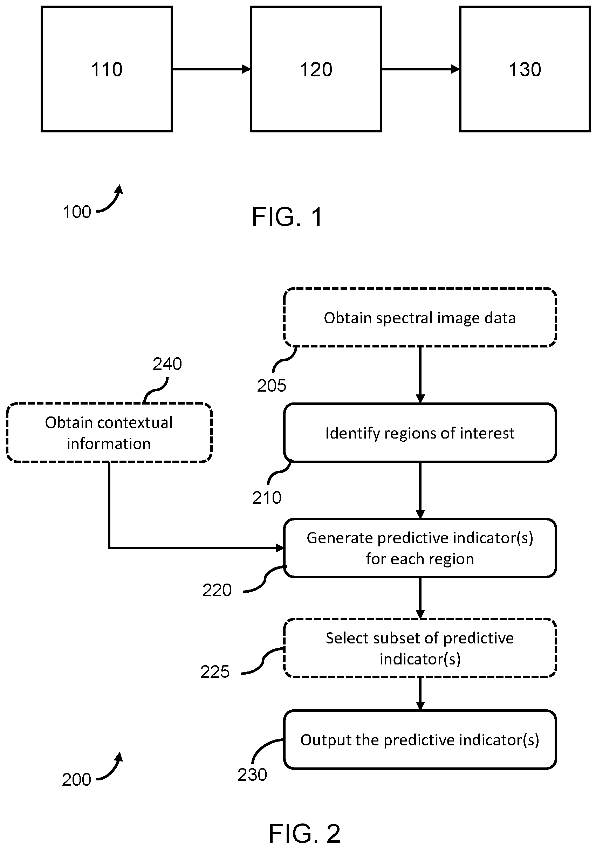

Figure 1 provides an overview of a system 100 or approach adopted by some embodiments of the invention. The system 100 is conceptually formed of three blocks or groups of processing functionalities.

A first block 110 represents a training engine, which produces or trains region-specific machine-learning algorithms. Each trained region-specific machine-learning algorithm is configured to process a portion of spectral data that contains a representation of a region of interest, which is a set of one or more organs.

A second block 120 represents a prediction component. The prediction component is configured to perform inference using the region-specific machine-learning algorithms. In particular, the machine-learning algorithms are used to process spectral image data of a subject. The second block 120 performs a process of identifying portions of the spectral image data that represent different regions of interest, and then processing each portion using the corresponding region-specific machine-learning algorithm.

A third block 130 represents a reporting and information component. This component is configured to use the results of the inference performed by the prediction component to alert or guide a clinician into identifying the most relevant outputs of the machine-learning algorithm(s) and/or the relevant parts of the spectral data corresponding or best representing these outputs.

Purely by way of example, if each machine-learning algorithm is configured to generate bounding boxes identifying a particular pathology, such as a disease, lesion or abnormality, then the third block may be able to identify the most clinically relevant or confident bounding boxes - optionally together with the most relevant and decisive parts of the spectral image data that produced the bounding box(es).

A more complete understanding of the system 100 will be elucidated from the following description, which describes a method that embodies the approach of system 100.

Figure 2 illustrates a method 200 according to an embodiment. The method 200 is configured for processing spectral image data of a subject. The method 200 can effectively represent the actions taken by the prediction component, and optionally the reporting and information component, previously described.

Method 200 may be carried out by a processing system. The processing system may be configured to receive, at an input interface, the spectral image data. The processing system may also comprise a processing unit for processing the received spectral image data.

The spectral image data is image data that has been generated by a computed tomography scanner and, specifically, a computed tomography scanner operating in a spectral imaging mode.

The spectral image data may comprise a plurality of different spectral images. Preferably, the spectral images represent different types of spectral image data. For instance, the spectral images may comprise a photoelectric effect image, a Compton-scattering image and so on. Other examples include iodine images, which indicates the presence of iodine; water images, which indicates the presence of water; contrast agent images, which indicates the presence of a contrast agent; an effective atomic number image and so on.

In some examples, the method 200 comprises a step 205 of obtaining spectral image data. This may comprise retrieving the spectral image data from a memory and/or from a computed tomography scanner. In some examples, step 205 comprises generating the spectral image data, e.g., using a known spectral imaging approach. Of course, step 205 can be omitted if the spectral image data is already present or has been otherwise previously obtained.

The method 200 comprises a step 210 of processing the spectral image data to identify at least two regions of interest, each region of interest representing a different set of one or more organs.

An organ is a biological organ or anatomical organ of the subject represented by the spectral image data.

Step 210 can be performed for instance, by registering the spectral image data to an anatomical atlas that identifies expected regions of interest. In general, spectral image data represents a portion of a body. It is possible to register the portion of the body and, therefore, the spectral image to an anatomical atlas. This approach may make use of shape matching algorithms or the like. Identifying regions of interest in the spectral image data is then performed by identifying each region of the registered spectral image that corresponds to a location of an expected region of interest in the anatomical atlas.

Another approach for performing step 210 is to perform an image segmentation process on the spectral image data. This may comprise performing a series of one or more image segmentation algorithms, e.g., to iteratively sub-divide the representation of the subject in the spectral image data into regions of interest or to individually identify different areas of interest.

The method 200 then performs a step 220 of processing each region of interest using a respective one of a plurality of sets of one or more machine-learning algorithms. Thus, each region of interest (i.e., each portion of the spectral image data representing an identified region of interest) is processed using a respective set of one or more machine-learning algorithms. Each set of one or more machine-learning algorithms, therefore, processes a different region of interest.

In this way, step 220 may comprise inputting each region of interest into each machine-learning algorithm in a respective set of machine-learning algorithms. Different regions of interest are provided to different sets of one or more machine-learning algorithms.

Each machine-learning algorithm is configured to process the region of interest to generate a predictive indicator that indicates a likelihood that the region of interest contains at least one representation of a predetermined pathology. More particularly, each machine-learning algorithm processes a portion or part of the spectral image data representing the region of interest to generate the predictive indicator.

Each predetermined pathology may comprise a disease, lesion, growth or abnormality in the respective region of interest. Other suitable pathologies that can be identified by a machine-learning algorithm processing spectral image data will be apparent to the skilled person.

Thus, step 220 is configured to produce at least one predictive indicator for each region of interest. Each region of interest is processed with a different set of one or more machine-learning algorithms. The number of machine-learning algorithms in each set may be greater than one, such that the number of predictive indicators produced for each region of interest may also be greater than one.

It is not essential that each machine-learning algorithm processes the entire portion of the spectral image data representing the region of interest. For instance, if spectral image data comprises a plurality of spectral images, then a machine-learning algorithm may process the portion of one or more, e.g., a subset and not all, of the plurality of spectral images that represent the region of interest.

Approaches for producing a machine-learning algorithm for use in step 220 are established in the art. The embodiments of the invention propose the use of region-specific algorithms, e.g., algorithms trained for processing a particular region or area of the spectral image data. Thus, in producing the machine-learning algorithms, the training data used to train each algorithm may contains only data of a particular region and/or may contain annotation, such as ground truth identifications, relevant for a particular region. For the sake of completeness, a more complete description of how to train a machine-learning algorithm is provided later in this disclosure.

The method then performs a step 230 of outputting at least one predictive indicator generated by the processing of each region of interest.

In some examples, step 230 comprises outputting all predictive indicators generated by step 220. Thus, the method may move directly from step 220 to step 230.

In other examples, step 230 comprises outputting only a subset, i.e., and not necessarily all, of the predictive indicators generated by step 220. Thus, the method 200 may comprise an optional step 225 of performing some further processing or filtering of the predictive indicators generated by step 220 to identify the at least one predictive indicator that is output by step 230. Step 225 thereby comprises selecting a subset of the predictive indicators generated in step 220.

In some examples, step 230 comprises outputting the at least one predictive indicator to a further processing system for further analysis and/or processing. For instance, the at least one predictive indicator may be provided to a pathology analysis suite for analyzing a particular pathology or condition of the subject.

In preferred examples, step 230 comprises controlling a user interface to provide a visual representation responsive to the or each of the at least one predictive indicator(s). Thus, step 230 may effectively perform the operations of a reporting and information component.

To improve the relevance and reduce clinician uncertainty, some embodiments make use of confidence scores or measures for the result(s) produced by each machine-learning algorithm. A confidence measure is an alternative label for a confidence score.

Thus, in some examples, each machine-learning algorithm is further configured to generate a confidence score for the predictive indicator. A confidence score represents a confidence in the likelihood that the region of interest contains the at least one representation of the predetermined pathology. A confidence score is a numeric value.

In this way, step 220 may be configured to produce a confidence score or confidence measure for each predictive indicator.

Approaches for configuring a machine-learning algorithm to produce a confidence score are well established in the art. By way of example only, a number of approaches for producing a confidence score are disclosed by Poggi, Matteo, Fabio Tosi, and Stefano Mattoccia, "Quantitative evaluation of confidence measures in a machine learning world." Proceedings of the IEEE International Conference on Computer Vision. 2017. Other approaches, which are particularly useful for medical applications, are disclosed by Lambrou, Antonis, Harris Papadopoulos, and Alex Gammerman. "Reliable confidence measures for medical diagnosis with evolutionary algorithms." IEEE Transactions on Information Technology in Biomedicine 15.1 (2010): 93-99.

Step 225, if performed, may make use of the confidence scores to process the predictive indicators produced in step 220 to identify the at least one predictive indicator that is output by step 230.

In particular, step 225 may comprise identifying or selecting those predictive indicators which confidence score meets one or more predetermined criteria.

For instance, step 225 may comprise selecting only the predictive indicators having one of the X largest confidence scores, where X is a real integer. Example values for X include 5, 10 or 20. In this way, only the most relevant and/or confident results of the pathology identification are identified, e.g., and provided to an individual. This improves the relevance and contextual understanding of the predictive indicators.

As another example, the step 225 may comprise selecting only the predictive indicators having a confidence score greater than a threshold confidence score. This avoids providing a clinician with inaccurate information. The threshold confidence score may be set by a clinician and/or based on clinical guidelines, practices or policy/policies. The value of the threshold confidence score may, for instance, be modified by a clinician at a user interface.

In another example, step 225 may comprise selecting only the predictive indicators having a confidence score greater than an indicator-specific threshold confidence score. The indicator-specific threshold confidence score may vary for each predictive indicator and, therefore, for each machine-learning algorithm. The value of the indicator-specific threshold may depend, for instance, upon the region processed by the corresponding machine-learning algorithm and/or the pathology investigated by the machine-learning algorithm.

This approach thereby effectively controls the (allowable) false positive rate for the selected predictive indicators. This approach recognizes that, for different regions or pathologies, different levels of false positive may be considered acceptable to a clinician. For instance, clinicians may tolerate a higher false positive level for a certain tricky-to-find cancer that is very harmful for the subject, but might insist on a low false positive rate for a simple-to-diagnose cancer. The value of each indicator-specific threshold may, therefore, be set by a clinician and/or based on clinical guidelines, practices or policy/policies. The value of each indicator-specific threshold may, for instance, be modified by a clinician at a user interface.

Step 230 may be configured to control the output of the at least one predictive indicator using the confidence measures. For instance, if step 230 comprises controlling a user interface to provide a visual representation of the predictive indicator(s), then step 230 may be configured to provide greater visual emphasis to any predictive indicators with higher confidence scores than any predictive indicators with lower confidence scores.

Providing greater visual emphasis can be achieved through the use of controlling a color for the visual representation of the predictive indicator response to the confidence score. For instance, different levels of confidence scores may be set at different colors or color saturation levels. By way of example, more confident predictive indicators may be colored green, with less confident indicators being colored red. Predictive indicators in between may be colored on a gradient or scale between green and red.

As another example, providing greater visual emphasis can be achieved by controlling a position or visual prominence of the predictive indicator(s) responsive to their confidence scores. For instance, if the predictive indicators are presented in the form of a list, the order of the predictive indicators in the list may be responsive to the confidence scores - e.g., indicators associated with higher scores may be positioned higher in the list.

As yet another example, the size of each visual representation of the predictive indicator(s) may be responsive to the confidence score(s) of each predictive indicator. For instance, predictive indicators with larger confidence scores may have a larger or more prominent visual representation at the user interface than predictive indicators with smaller confidence scores.

In at least one example, the step of controlling the user interface comprises ordering all predictive indicators to be visually represented based on their confidence measures to determine an order of predictive indicators, and controlling the user interface to provide a visual representation of the determined order of predictive indicators.

This provides a mechanism for effectively controlling the presented order of predictive indicators and, therefore, the visual emphasis of the predictive indicators, responsive to the confidence scores for each predictive indicator. Approaches for ordering values based on their magnitude would be known to the skilled person.

In at least one embodiment, each confidence measure is weighted, biased or modified responsive to contextual information. This process may take place as part of step 220.

The contextual information may, for instance, identify a desired or target region or regions of interest. Modifying the confidence score may comprise, for instance, more heavily weighting predictive measures for regions of interest that include, are included by, or are near the desired region(s) of interest compared to more distant regions of interest.

This approach recognizes that the underlying clinical setup or context will affect the relevance of different predictive indicators. For instance, if a clinician is investigating a chest pain, then predictive indicators for regions of interest near the chest, such as the heart, or the lungs, will have more clinical relevance than regions more distant from the chest. As another example, if a clinician is investigating a leg pain, then predictive indicators for the hips, legs and/or feet will have more clinical relevance than regions of the head or heart.

The contextual information may, for instance, identify a desired pathology or pathologies. Each machine-learning algorithm is configured to generate an indicator for a particular pathology. Modifying the confidence score may comprise, for instance, more heavily weighting predictive measures for desired pathologies compared to other pathologies.

This approach recognizes that the pathology or pathologies of a machine-learning method will affect the relevance of different predictive indicators.

Weighting or modifying may be performed by, for instance, multiplying the confidence measure by a determined value, which may be on a predetermined scale, e.g., 0 to 1. In this context, more heavily weighting means multiplying by a larger value. Other approaches for performing weighting, including non-linear weighting or division-based approaches, will be apparent to the skilled person.

This approach provides a mechanism for providing more contextually relevant control of the confidence score and for providing contextually useful information for an individual at a user interface.

Thus, step 220 may comprise modifying each confidence measure responsive to contextual information. The method may therefore comprise a step 240 of obtaining contextual information.

The contextual information may comprise an indicator of a target region of interest and/or pathology. Step 220 may comprise weighting the predictive indicators of regions of interest based on or responsive to the proximity or relevance of each region of interest to the target region of interest and/or pathology.

Any herein described approach that makes use of confidence values, such as selecting predictive indicators having confidence values that meet one or more predetermined criteria, could be adapted to instead make use of weighted confidence values. This makes the outcome more clinically relevant, i.e., relevant to an ongoing or relevant medical process.

In some examples, in step 220, at least one set of one or more machine-learning algorithms comprises a plurality of machine-learning algorithms configured to identify a same pathology in the region of interest with which the set is associated. Thus, for at least one region of interest, a plurality of predictive indicators may be generated for a same pathology.

In such examples, for any region processed using a set comprising a plurality of machine-learning algorithms, the confidence scores for the predictive indicators associated with the same pathology can be used to select to select one, e.g., only one, of the predictive indicators to output. In particular, the predictive indicator having the highest confidence score, for that particular pathology in that particular region of interest, can be selected.

Thus, step 220 may comprise, for at least one of the regions of interest, generating a plurality of predictive indicators, with corresponding confidence scores, for a same pathology. For each such region of interest, one of the plurality of predictive indicators for the same pathology may be selected for further use, e.g., to be output or used in step 230, based on the confidence score of each predictive indicator. This selection can take place in step 220 or step 225 (if performed).

This approach allows the most relevant or confident predictive indicator to be used in further processing, increasing an accuracy of the predictive indicators and relevance to a clinician.

This approach is particularly advantageous when the spectral image data comprises a plurality of spectral images, and each machine-learning algorithm for identifying a same pathology using a particular region of interest is configured to process a different set of one or more spectral images to produce the predictive indicator.

This approach recognizes that different spectral images are advantageous for identifying certain pathologies, and/or that imaging conditions may affect which spectral images are best at identifying a particular pathology with a greatest confidence at any given time. This approach thereby maintains a high level of accuracy in producing the predictive indicators.

In some examples, at least one of the machine-learning algorithms comprises a location-identifying machine-learning algorithm.

A location-identifying machine-learning algorithm is configured to process the region of interest to identify, within the region of interest, the location of any representation of the predetermined pathology predicted to be present with a likelihood greater than a predetermined likelihood. Identifying a location of a pathology within image data may, for example, be carried out by performing segmentation techniques trained for identifying particular pathologies.

Accordingly, step 220 may be configured such that the predictive indicator produced by the location-identifying machine-learning algorithm indicates any identified location within the region of interest. This may, for instance, take the form of a bounding box or outline identifying the location of a predicted pathology.

In some examples, where step 230 comprises providing a visual representation of the predictive indicator(s), step 230 is configured, for each identified location of the at least one predictive indicator(s), to overlay a visual representation of the identified location over a visual representation of the spectral image data. This approach provides a clinician with useful and contextual information about the identified location.

Purely by way of example, if each machine-learning algorithm is configured to generate bounding boxes identifying a particular pathology, such as a disease, lesion or abnormality, then step 230 may comprise providing a visual representation of the bounding box(es) overlaying a visual representation of the spectral image data at the relevant location. In some examples, this process of overlaying a visual representation of the identified location is only performed responsive to a user input at a user interface. For instance, a user may be able to select or otherwise identify a particular visual representation of a predictive indicator, and an appropriate overlay for that predictive indicator may be provided.

In other examples, this process is performed for each of the at least one predictive indicator(s).

In some examples, for each identified location of the at least one predictive indicator(s), step 230 is configured to provide a visual representation of a portion of the spectral image data in the vicinity of the identified location. In particular, the visual representation of the portion of the spectral image data may contain at least a visual representation of the identified location.

The size of the portion may be less than the (total) size of the (total) spectral image data. In particular, the portion may represent only the region of interest of the spectral image data that was processed to produce the predictive indicator and/or the identified location.

This approach provides useful and specific clinical information for a clinician.

If the spectral image data comprises more than one spectral result, i.e. more than one spectral image, then step 230 may be configured to select and display one of these spectral images, or a portion of one of these spectral images, for display at the user interface together with the predictive indicator.

In some examples, this process of displaying one or more of the spectral images is only performed responsive to a user input at a user interface. For instance, a user may be able to select or otherwise identify a particular visual representation of a predictive indicator, and an appropriate spectral image for that predictive indicator may be provided.

In other examples, this process is performed for each of the at least one predictive indicator(s).

Selection of the spectral image can be based on the type of pathology associated with the predictive indicator. This approach recognizes that some spectral images are more clinically useful than others for particular pathologies. For instance, an effective atomic number image, also known as a Z image, may be selected for a predictive indicator for a lesion type pulmonary emboli. This approach thereby provides more contextually useful information.

As another example, selection of the spectral image can be also or additionally based on characteristics of the spectral images. By way of example, a spectral image with a greatest contrast ratio may be selected as the spectral image to provide alongside the predictive indicator. As another example, a spectral image with a greatest signal-to-noise ratio can be selected as the spectral image to provide alongside the predictive indicator

Thus, for each spectral image of the spectral image data, step 230 may comprise a step of performing one or more image analysis techniques on the spectral image to identify one or more image properties or characteristics. Step 230 may then comprise using the image property/properties or characteristic(s) to determine which spectral image to provide alongside the predictive indicator, e.g., to select the spectral image having the greatest contrast, greatest image-to-noise ratio, or the like.

As yet another example, selection of the spectral image may also or additionally be responsive to one or more user-defined settings. Different users may have different preferences for different types of spectral image, which can be taken into account.

In some examples, selection of the spectral image may be based on both the type of pathology and one or more user-defined settings. Thus, a user or individual may be able to define preferred spectral images for different types of pathology, such that the type of pathology associated with the predictive indicator can be used alongside the user preference to select the spectral image.

It has been previously described how a machine-learning algorithm may process only a portion of one or more, e.g., a subset or not all, of a plurality of spectral images that represent the region of interest to produce a predictive indicator. In such embodiments, selection of the spectral image may be based on the spectral image(s) used to produce the corresponding predictive indicator. For instance, the selected spectral image may be one of the spectral image(s) used to produce the predictive indicator. In this way, step 230 may comprise selecting the spectral image(s) that were used or processed by a machine-learning algorithm to generate the predictive indicator as the spectral image(s) to be provided alongside the predictive indicator.

The proposed approach for selecting a spectral image from spectral images of the spectral image data may be combined with the concept of providing a visual representation of a portion of the spectral image data in the vicinity of the identified location of a pathology. In particular, the portion of the spectral image data may be a portion or part of a particular spectral image or spectral result containing the identified location of a pathology. Approaches for selecting the particular spectral image have been previously described.

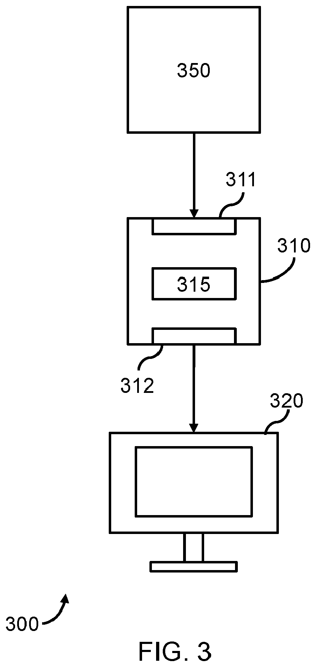

Figure 3 illustrates a system 300 according to an embodiment. The system comprises a processing system 310, which is itself an embodiment, and a user interface 320. The processing system 310 comprises a user interface 311 configured to obtain spectral image data. The spectral image data comprises a spectral representation of a subject or individual, e.g., an individual that has undergone or is undergoing a spectral imaging process. The user interface 311 may, for instance, obtain or retrieve the spectral image data from a memory 350. Alternatively, the spectral image data may be obtained from a computed tomography scanner, e.g., operating in a spectral imaging mode.

The processing system 310 comprises a processing unit, processing circuitry, or module 315 configured to process the spectral image data to identify at least two regions of interest, each region of interest representing a different set of one or more organs. Approaches for appropriately processing spectral image data that the processing unit 315 may employ have been previously described.

The processing unit 315 is further configured to process each region of interest using a respective one of a plurality of sets of one or more machine-learning algorithms, each machine-learning algorithm being configured to process the region of interest to generate a predictive indicator that indicates a likelihood that the region of interest contains at least one representation of a predetermined pathology. The processing unit 315 may be configured to output, via an output interface 312, at least one predictive indicator generated by the processing of each region of interest. The outputting may be controlled by the processing unit 315 of the processing system 310. In some examples, the processing unit 315 is configured to select the at least one predictive indicator from all predictive indicators generated using the sets of machine-learning algorithms. The selection may be responsive to confidences score generated by each machine-learning algorithm in the sets of one or more machine-learning algorithms.

The user interface 320 of the system 300 may be configured to provide a visual representation of the (selected) at least one predictive indicator. The operation of the user interface 320 may be controlled by the processing unit 315, e.g., via the output interface 312. By way of example, the processing unit 315 may be configured to generate display data that is processed by the user interface 320 to provide the visual representation of the predictive indicator(s). Thus, the processing unit 315 may be configured to control, via the output interface 312, the user interface 320 to provide a visual representation responsive to the at least one predictive indicators.

The skilled person will readily appreciate how the processing system 310 can be appropriately configured to carry out any previously described method and/or approach. For instance, the processing system 310 may be configured to produce a confidence value for each predictive indicator, select a subset of predictive indicator(s) using the confidence values, control visual representations based on confidence values, control which visual representation are provided based on confidence values, control visual emphasis of predictive indicators responsive to confidence values, weight confidence values using contextual information and so on.

Embodiments make use of machine-learning algorithms to process a region of interest of spectral image data. A machine-learning algorithm is any self-training algorithm that processes input data in order to produce or predict output data. Here, the input data comprises spectral image data, or a region of spectral image data, and the output data comprises an indicator that indicates the likelihood of the presence of a particular pathology, such as a disease, lesion, growth or abnormality, in the respective region of interest.

Suitable machine-learning algorithms for being employed in the present invention will be apparent to the skilled person. Examples of suitable machine-learning algorithms include decision tree algorithms and neural networks. Other machine-learning algorithms such as logistic regression, support vector machines or Naive Bayesian models are suitable alternatives.

The structure of a neural network is loosely inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g., ±1%) to the training output data entries. This is commonly known as a supervised learning technique. For example, where the machine-learning algorithm is formed from a neural network, (weightings of) the mathematical operation of each neuron may be modified until the error converges. Known methods of modifying a neural network include gradient descent, backpropagation algorithms and so on.

The training input data entries correspond to example spectral image data or portions of spectral image data. The training output data entries correspond to indicators that indicate the likelihood of the presence of a particular pathology, such as a disease, lesion, growth or abnormality, in the respective region of interest.

Embodiments make use of a processing unit and/or a processing system. The processing unit/system can be implemented in numerous ways, with software and/or hardware, to perform the various functions required. A processor is one example of a processing unit/system which employs one or more microprocessors that may be programmed using software, such as code, to perform the required functions. A processing unit/system may however be implemented with or without employing a processor, and also may be implemented as a combination of dedicated hardware to perform some functions and a processor, e.g., one or more programmed microprocessors and associated circuitry, to perform other functions. Examples of processing unit/system components that may be employed in various embodiments of the present disclosure include, but are not limited to, conventional microprocessors, application specific integrated circuits (ASICs), and field-programmable gate arrays (FPGAs) .

In various implementations, a processor or processing unit/system may be associated with one or more storage media such as volatile and non-volatile computer memory such as RAM, PROM, EPROM, and EEPROM. The storage media may be encoded with one or more programs or instructions that, when executed on one or more processors and/or processing unit/systems, perform the required functions. Various storage media may be fixed within a processor or processing unit/system or may be transportable, such that the one or more programs/instructions stored thereon can be loaded into a processor or processing unit/system.

It will be understood that disclosed methods are preferably computer-implemented methods. As such, there is also proposed the concept of a computer program comprising code means for implementing any described method when the program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the Figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word comprising does not exclude other elements or steps, and the indefinite article a or an does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term adapted to is used in the claims or description, it is noted the term adapted to is intended to be equivalent to the term configured to. If the term arrangement is used in the claims or description, it is noted the term arrangement is intended to be equivalent to the term system, and vice versa. Any reference signs in the claims should not be construed as limiting the scope.

## Claims

1. A computer-implemented method of processing spectral image data of a subject generated by a computed tomography scanner, the computer-implemented method comprising:
processing the spectral image data to identify at least two regions of interest, each region of interest representing a different set of one or more organs;
processing each region of interest using a respective one of a plurality of sets of one or more machine-learning algorithms, each machine-learning algorithm being configured to process the region of interest to generate a predictive indicator that indicates a likelihood that the region of interest contains at least one representation of a predetermined pathology; and
outputting at least one predictive indicator generated by the processing of each region of interest.

2. The computer-implemented method according to claim 1, wherein:
each machine-learning algorithm is further configured to generate a confidence score for the predictive indicator generated by the machine-learning algorithm, the confidence score representing a confidence in the likelihood that the region of interest contains the at least one representation of the predetermined pathology;
the computer-implemented method further comprises selecting at least one of the predictive indicators generated by the processing of each region of interest responsive to each confidence score generated by the sets of one or more machine-learning algorithms; and
outputting at least one predictive indicator comprises outputting the selected at least one predictive indicator.

3. The computer-implemented method according to claim 1 or 2, wherein outputting the at least one predictive indicator comprises controlling a user interface to provide a visual representation responsive to the at least one predictive indicator.

4. The computer-implemented method according to claim 3, wherein:
each machine-learning algorithm is further configured to generate a confidence score for the predictive indicator generated by the machine-learning algorithm, the confidence score representing a confidence in the likelihood that the region of interest contains the at least one representation of the predetermined pathology; and
controlling the user interface is further responsive to each confidence score generated by the set of one or more machine-learning algorithms.

5. The computer-implemented according to claim 4, wherein controlling the user interface comprises providing greater visual emphasis to any of the at least one predictive indicator with higher confidence scores than any of the at least one predictive indicator with lower confidence scores.

6. The computer-implemented method according to claims 4 to 5, wherein controlling the user interface comprises:
ordering the at least one predictive indicator based on their confidence measures to determine an order of the at least one predictive indicator; and
controlling the user interface to provide a visual representation of the determined order of the at least one predictive indicator.

7. The computer-implemented method according to any of claims 1 to 6, wherein at least one of the machine-learning algorithms comprises a location-identifying machine-learning algorithm, wherein:
the location-identifying machine-learning algorithm is configured to process the region of interest to identify, within the region of interest, the location of any representation of the predetermined pathology predicted to be present with a likelihood greater than a predetermined likelihood; and
the predictive indicator produced by the location-identifying machine-learning algorithm indicates any identified location within the region of interest.

8. The computer-implemented method according to claim 7, wherein:
outputting each predictive indicator comprises controlling a user interface to provide a visual representation responsive to the at least one predictive indicator; and
for each location identified by any location-identifying machine-learning algorithm that provides a predictive indicator in the at least one predictive indicator, the visual representation comprises a visual representation responsive to the identified location.

9. The computer-implemented method according to claim 8, wherein controlling the user interface comprises, for each location identified by any location-identifying machine-learning algorithm that provides a predictive indicator in the at least one predictive indicator, overlaying a visual representation of the identified location over a visual representation of the spectral image data.

10. The computer-implemented method according to claim 8 or 9, wherein controlling the user interface comprises, for each location identified by any location-identifying machine-learning algorithm that provides a predictive indicator in the at least one predictive indicator, providing a visual representation of a portion of the image data in the vicinity of the identified location.

11. The computer-implemented method according to any of claims 1 to 10, wherein each predetermined pathology comprises a disease, lesion, growth or abnormality in the respective region of interest.

12. The computer-implemented method according to any of claims 1 to 11, wherein processing the spectral image data to identify at least two regions of interest comprises either:
performing an image segmentation process on the spectral image data; or
registering the spectral image data to an anatomical atlas that identifies expected regions of interest; and identifying regions of the registered spectral image data falling within the expected regions of interest of the anatomical atlas as the at least two regions of interest.

13. A processing system for processing spectral image data of a subject generated by a computed tomography scanner, the processing system comprising:
a memory that stores a plurality of instructions; and
processor circuitry that couples to the memory and is configured to execute the plurality of instructions to:
obtain the spectral image data at an input interface;
process the spectral image data to identify at least two regions of interest, each region of interest representing a different set of one or more organs;
process each region of interest using a respective one of a plurality of sets of one or more machine-learning algorithms, each machine-learning algorithm being configured to process the region of interest to generate a predictive indicator that indicates a likelihood that the region of interest contains at least one representation of a predetermined pathology; and
output at least one predictive indicator generated by the processing of each region of interest.

14. The processing system according to claim 13, wherein:
each machine-learning algorithm is further configured to generate a confidence score for the predictive indicator generated by the machine-learning algorithm, the confidence score representing a confidence in the likelihood that the region of interest contains the at least one representation of the predetermined pathology; and
the processor circuitry is configured to execute the plurality of instructions to:
select at least one of the predictive indicators generated by the processing of each region of interest responsive to each confidence score generated by the sets of one or more machine-learning algorithms; and
output at least one predictive indicator comprises outputting the selected at least one predictive indicator.

15. A non-transitory computer program product comprising computer program code which, when executed on a computing device having a processing system, cause the processing system to perform all the method according to any of claims 1 to 12.
